# EUROPEAN PATENT SPECIFICATION

(11) **EP 1 653 526 B1**
(45) Date of publication and mention of the grant of the patent: **24.12.2008**
(21) Application number: 05023308.9
(22) Date of filing: 25.10.2005
(51) Int. Cl.: H01L 41/04, F02D 41/20

(54) **Driving system for piezoelectric actuator**
Ansteuerschaltung für piezoelektrischen Aktor
Système de commande pour actionneur piezo-électrique

(30) Priority: 27.10.2004 JP 2004312931
(43) Date of publication of application: 03.05.2006
(73) Proprietor: Denso Corporation, Kariya-city, Aichi-pref. 448-8661 (JP)
(72) Inventor: Naruse, Hideo, Kariya-city, Aichi-pref. 448-8661 (JP); Nagase, Noboru, Kariya-city, Aichi-pref. 448-8661 (JP)
(74) Representative: TBK-Patent

(56) References cited:
- WO-A-98/55751
- WO-A2-03/038918
- WO-A2-20/04001868
- DE-A1- 10 120 944
- DE-A1- 10 213 875
- DE-A1- 19 843 621
- DE-A1- 19 854 306
- DE-A1- 19 959 716
- DE-C1- 3 133 824
- JP-A- 8 205 401

## Description

A piezoelectric actuator is an actuator in which a piezoelectric stack produced by stacking a large number of piezoelectric elements expands and contracts by a piezoelectric effect. It is arranged, for example, inside an injector for fuel injection in a common-rail fuel injection apparatus of a diesel engine. In this injector, valve opening and valve closing are switched over by expansion and contraction operations of the piezoelectric actuator. The piezoelectric actuator is a capacitive load and can be switched to an expansion state and a contraction state by its charging and discharging, respectively.

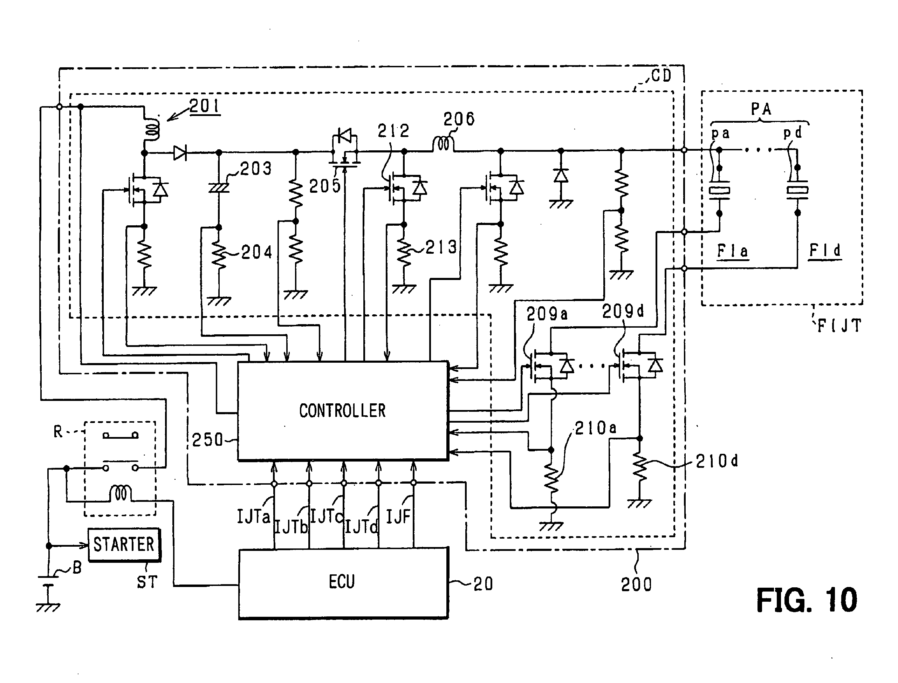

FIG. 10 shows a driving system that performs controls pertaining to charging and discharging of a piezoelectric actuator provided in a fuel injector of a diesel engine. This driving system is constructed with a driver unit 200 for driving a piezoelectric actuator provided in a fuel injection valve group FIJT and an electronic control unit (ECU) 20 for controlling the diesel engine. Electric power is supplied to the driver unit 200 from a battery B through a relay R. Moreover, electric power is also supplied to the electronic control unit 20 and a starter motor ST that cause initial rotation of the diesel engine from the battery B.

The fuel injection valve group FIJT has fuel injection valves for injecting fuel to respective cylinders of the diesel engine (Fla to Fld; the figure illustrating four cylinders). These fuel injection valves Fla to Fld are equipped with respective piezoelectric actuators pa to pd (piezoelectric actuator PA).

The electric power supplied to the driver unit 200 from the battery B through the relay R is first supplied to a DC/DC converter 201 that is a booster circuit. In the DC/DC converter 201, the voltage supplied from the battery B is boosted, and this boosted voltage is applied to a capacitor 203.

A series connection circuit consisting of a charge switch 205, a charging/discharging coil 206, the piezoelectric actuator PA, selection switches 209a to 209d, and resistors 210a to 210d is provided to be connected in parallel to a series connection circuit of this capacitor 203 and a resistor 204. With this configuration, any one of the selection switches 209a to 209d is selectively turned on and the charge switch 205 is subjected to ON/OFF-operations, whereby the electric charge of the capacitor 203 is charged in the piezoelectric actuator PA.

A series connection circuit of a discharge switch 212 and a resistor 213 is provided to be connected in parallel to the series connection circuit consisting of the piezoelectric actuator PA, the selection switches 209a to 209d, and the resistors 210a to 210d. As a result, in the state where the charge switch 205 is turned off, the piezoelectric actuator PA is discharged by selectively turning on any one of the selection switches 209a to 209d and at the same time performing ON/OFF-operations on the discharge switch.

Thus, according to the above-mentioned driving system, an expansion state of the piezoelectric actuator can be controlled by controlling charging and discharging of the piezoelectric actuator.

Such a conventional driving system for a piezoelectric actuator is disclosed, for example, in Patent document 1 and Patent document 2 and will be referred to below in addition to one that is shown in FIG. 10. Specifically, JP2002-136156A discloses one that controls supply energy to a piezoelectric actuator in a high precision and JP2003-299371A proposes a method for inspecting failures of a piezoelectric actuator and a driver unit.

In the case where the diesel engine is started by the starter motor ST or other cases, the voltage of the battery B tends to drop remarkably. Under such circumstances, the voltage of the battery B may drop below the minimum operating voltages of an electronic controller 250 and of the electronic control unit 20. When the electric charge is stored in the piezoelectric actuator PA at this time, there is a case where the piezoelectric actuator PA keeps being in an expansion state and the fuel injection valve keeps being open. For this reason, a drop in the pressure of a common rail (not shown) no longer halts fuel injection until the injection valve is mechanically closed.

Moreover, electric power generation of an alternator (not shown) that is driven by the engine to generate electric power supplied to the battery B varies depending on a variation in rotation of the engine. When the voltage of the battery B has dropped remarkably, the voltage of the battery B comes to show a significant periodic change because the voltage of the battery B is susceptible to a variation in electric power generation of the alternator. For this reason, the voltage of the battery B varies periodically, fluctuating around the minimum operating voltage of the driving system each time, and consequently fuel injection and injection stop are repeated.

Here, in driving systems for performing a charge control and a discharge control of a piezoelectric actuator, electric charge stored in the piezoelectric actuator is not discharged.

DE 198 43 621 A1 discloses a discharging circuit for a capacitive actuator, particularly a piezoelectrically operated injection valve for a combustion engine. The capacitive actuator is short-circuited over a discharging switch after an actuating process. Herein, the control input of the discharging switch is connected to the actuator. Due to this, in case of a failure of the external driving, the discharging switch is automatically conductive controlled by the actuator voltage and discharges the actuator automatically.

It is the object of the present invention to provide a driving system for a piezoelectric actuator capable of discharging electric charge stored in the piezoelectric actuator even when a failure arises in operations pertaining to driving of the driving system for the piezoelectric actuator.

This object is solved by the driving system according to claim 1.

Further advantageous developments are set out in the dependent claims.

The above and other objects, features and advantages of the present invention will become more apparent from the following detailed description made with reference to the accompanying drawings. In the drawings:
FIG. 1 is a circuit diagram showing a driving system for a piezoelectric actuator according to the embodiment.
FIG. 2 is a time chart showing a mode of charge and discharge controls of the piezoelectric actuator according to the embodiment.
FIG. 3 is a schematic diagram showing modes of a current flow of a charging/discharging circuit at the time of a charge control according to the embodiment.
FIG. 4 is a schematic diagram showing modes of a current flow of the charging/discharging circuit at the time of a discharge control according to the embodiment.
FIG. 5 is a time chart showing variation in a battery voltage at the time of starting of an engine in the embodiment.
FIG. 6 is a time chart showing a discharge mode of the piezoelectric actuator at the time of voltage drop of a battery in the embodiment.
FIG. 7 is a circuit diagram showing a driving system for a piezoelectric actuator according to a first further example which is no embodiment of the present invention.
FIG. 8 is a time chart showing a discharge mode of the piezoelectric actuator at the time of voltage drop of a battery in the first further example which is no embodiment of the present invention.
FIG. 9 is a flowchart showing a procedure of processing at the time of abnormality of the charging/discharging circuit in the first further example which is no embodiment of the present invention.
FIG. 10 is a circuit diagram showing a driving system for a conventional piezoelectric actuator.

### (Embodiment)

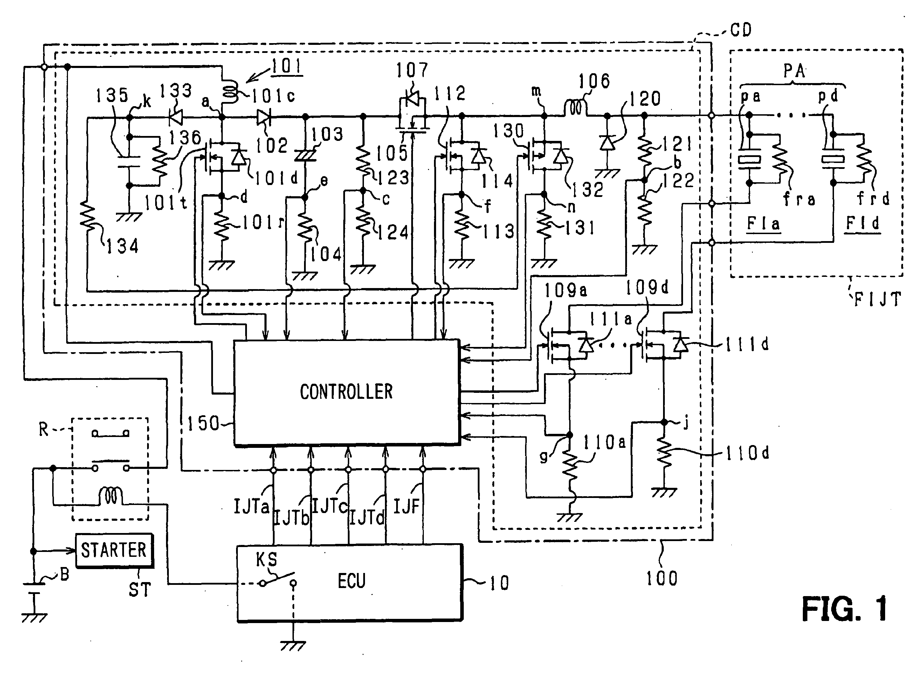

Referring first to FIG. 1, a driving system for a piezoelectric actuator according to the embodiment is constructed with a driver unit 100 for driving piezoelectric actuators provided in a fuel injection valve group FIJT of a diesel engine and an electronic control unit (ECU) 10 for controlling the diesel engine. The driver unit 100 is supplied with electric power from a battery B through a relay R. Moreover, the electronic control unit 10 and a starter motor ST that crank the diesel engine are also supplied with electric power from this battery B. In addition, the relay R is turned ON/OFF by the electronic control unit 10 operating a switch KS inside the electronic control unit 10 in response to an operation of a key switch (not shown). That is, turning on the switch KS allows a current to flow from the battery B to the ground through the switch KS. This current magnetizes a coil in the relay R to turn on the relay R.

The fuel injection valve group FIJT includes fuel injection valves Fla to Fld for supplying fuel to respective cylinders of the diesel engine. These fuel injection valves Fla to Fld are equipped with piezoelectric actuators pa to pd (piezoelectric actuator PA), respectively. The piezoelectric actuator PA is an actuator that is a piezoelectric stack made of a plurality of piezoelectric devices stacked, and expands and contracts by a piezoelectric effect. Specifically, the piezoelectric actuator PA is a capacitive load, and expands by being charged and contracts by being discharged. In addition, with expansion operations of the piezoelectric actuators pa to pd, the fuel injection valves Fla to Fld open to inject fuel to the respective cylinders. On the other hand, with contraction operations of the piezoelectric actuators pa to pd, the fuel injection valves Fla to Fld close and fuel injection is suspended.

These piezoelectric actuators pa to pd are equipped with resistors fra to frd for fail-safe operation each connecting both terminals of each actuator. These resistors fra to frd each have a function of discharging the electric charge when the discharging becomes impossible, such as when the piezoelectric actuators pa to pd are disconnected from the driver unit 100, and a function of discharging the electric charge generated by a pyroelectric effect. Based on requirements for responsiveness and energy loss pertaining to expansion of the piezoelectric actuators pa to pd in response to charging of the piezoelectric actuators pa to pd and an injection continuation time, these resistors fra to frd are set to optimum values (for example, 0.1 to 10 MΩ).

On the other hand, the driver unit 100 is equipped with a charging/discharging circuit CD for charging and discharging the piezoelectric actuator by being connected to the piezoelectric actuator PA and a controller 150 that performs controls pertaining to charging and discharging of the piezoelectric actuator PA by performing operations of conduction and non-conduction (by operating the drive state) of an electric path of this charging/discharging circuit CD. The charging/discharging circuit CD and the controller 150 are supplied with electric power from the battery B through the relay R. Here, the charging/discharging circuit CD will be explained.

The electric power supplied to the charging/discharging circuit CD from the battery B through the relay R is first supplied to a DC/DC converter 101 that is a booster circuit. This DC/DC converter 101 is constructed as a series connection circuit of a coil 101 c, a N-channel metal oxide semiconductor (MOS) transistor 101t, and a resistor 101 r. One terminal of the DC/DC converter 101 is connected to the battery B and the other terminal of the same is connected to the ground. In the figure, a diode 101d is a parasitic diode formed by forming the transistor 101t; its anode is connected to the ground and its cathode is connected to the coil 101c. By performing ON/OFF-operations on the transistor 101t, this DC/DC converter 101 boosts the voltage of the battery B (for example, 12 volts) to a high voltage (for example, 200 to 300 volts) for controlling the charging of the piezoelectric actuator PA.

The boosted voltage of the DC/DC converter 101 is applied to a capacitor 103 through node a between the coil 101 c and the transistor 101t and a diode 102. One terminal of this capacitor 103 is connected to the cathode of the diode 102, and the other terminal of the same is connected to the ground through a resistor 104. Then, when the boosted voltage of the DC/DC converter 101 is applied to the capacitor 103, this capacitor 103 will store electric charge to be supplied to the piezoelectric actuator PA. It is preferable that the capacitor 103 has a capacitance such that its voltage hardly varies depending on electric charge by one charging operation to be supplied to the piezoelectric actuator PA (for example, about a few hundred µF).

The high-potential terminal of this capacitor 103, i.e., the cathode side of the diode 102, is connected to the high-potential terminal of the piezoelectric actuator PA through a series connection circuit of a charge switch 105 and a charging/discharging coil 106. The low potential terminals of the piezoelectric actuators pa to pd are grounded through series connection circuits consisting of selection switches 109a to 109d and resistors 110a to 110d, respectively. Here, the charge switch 105 is made up of a N-channel MOS transistor. Moreover, a diode 107 is a parasitic diode formed by the formation of this transistor; its anode is connected to the charging/discharging coil 106, and its cathode is connected to the diode 102, respectively. Moreover, the selection switches 109a to 109d are each made up of a N-channel MOS transistor. Diodes 111a to 111d are parasitic diodes formed by these transistors being formed, and their anodes are connected to the ground and their cathodes are connected to the piezoelectric actuator PA, respectively.

One terminal of a discharge switch 112 is connected with a node between the charge switch 105 and the charging/discharging coil 106, and the other terminal of this discharge switch 112 is grounded through a resistor 113. Here, the discharge switch 112 is made up of a N-channel MOS transistor. A diode 114 is formed by this transistor being formed, and its cathode is connected to both the charge switch 105 and the charging/discharging coil 106.

The configuration makes it possible to construct a closed-loop circuit in which both ends of the capacitor 103 for storing electric charge of the boosted voltage of the DC/DC converter 101 and the piezoelectric actuator PA are connected in parallel in the charging/discharging circuit using the charge switch 105, the discharge switch 112, and the selection switches 109a to 109d as a part of the closed-loop circuit. Furthermore, the configuration makes it possible to construct a closed-loop circuit in which the discharge switch 112 and the piezoelectric actuator PA are connected in parallel using the charge switch 105, the discharge switch 112, and the selection switches 109a to 109d as a part of the closed-loop circuit. Then, by using these closed-loop circuits, the electric charge are stacked in the piezoelectric stacks (charging of the piezoelectric actuator PA) and the electric charge stored in the piezoelectric stacks is discharged (discharging of the electric charge stored in the piezoelectric actuator PA).

Further, in order to drive the charge switch 105 and the discharge switch 112 at a high speed, signals are outputted from the controller 150 to the charge switch 105 and the discharge switch 112 through a driver (not shown). It is preferable that this driver is supplied with electric power from the high-potential terminal of the capacitor 103.

Moreover, the charging/discharging circuit CD is provided with a diode 120 in order to prevent the potential of the piezoelectric actuator PA from becoming negative. Specifically, a cathode of the diode 120 is connected to the ground, and a cathode thereof is connected to a node between the charging/discharging coil 106 and the high-potential terminal of the piezoelectric actuator PA, respectively.

Moreover, the charging/discharging circuit CD is equipped with a series connection circuit of a resistor 121 and a resistor 122 between a node of the high-potential terminal of the piezoelectric actuator PA and the charging/discharging coil 106, and the ground in order to detect the potential of the high-potential terminal of the piezoelectric actuator PA. By the controller 150 receiving the potential between these resistors 121 and 122 (potential of node b), it becomes possible to detect indirectly the potential of the piezoelectric actuator PA that will become a very high potential.

In addition, the charging/discharging circuit CD is equipped with a series connection circuit of a resistor 123 and a resistor 124 between a node of the cathode of the diode 102 and the charge switch 105 and the ground in order to detect the potential of the high-potential terminal of the capacitor 103. By the controller 150 grabbing the potential between these resistors 123 and 124 (the potential of node c), it becomes possible to grasp indirectly the potential of the capacitor 103 that will become a very high potential.

In addition, in order to detect an operation state of the DC/DC converter 101, a charge storage state of the capacitor 103, a discharge state by the discharge switch 112, and a current flow mode through the selection switches 109a to 109d, the controller 150 is configured to monitor the potentials of nodes d to j.

In this mode, the controller 150 is configured to diagnose whether an abnormality exists in this charging/discharging circuit CD as well as performing a control pertaining to charging and discharging of the piezoelectric actuator PA by monitoring the potentials at several points of the charging/discharging circuit CD. Then, the controller 150 generates an IJF signal that is a signal about the existence of abnormalities, and outputs it to the electronic control unit 10.

Next, operations of the embodiment, that is, the charging/discharging circuit CD including the electronic control unit 10 and the controller 150, will be described below.

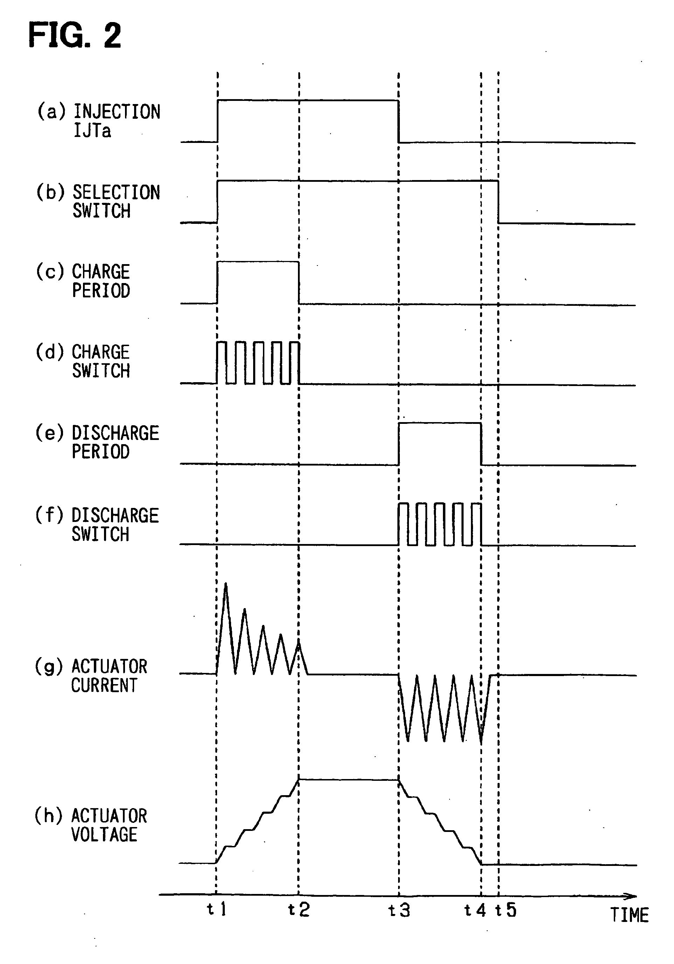

FIG. 2 is a time chart showing an operational mode of the charging/discharging circuit CD. Here, FIG. 2(a) shows a change of an injection signal that is a signal IJTA for specifying fuel injection timing and an injection period by setting its logic level to "H" for the piezoelectric actuator PA. FIG. 2(b) shows a change of a control signal of the selection switch 109a to 109d that is a signal for turning on a specific switch by setting its logic level to "H." The figure illustrates an operational mode of the selection switch 109a. FIG. 2(c) shows a change of a charge period signal that is a signal for specifying timing and a period when the piezoelectric actuator PA is charged through an operation of the charge switch 105 by setting its logic level to "H." FIG. 2(d) shows a change of an operational mode of the charge switch 105 in response to the charge period signal. FIG. 2(e) shows a change of a discharge period signal that is a signal for specifying discharge timing and a period when the piezoelectric actuator PA is discharged through an operation of the discharge switch 112 by setting its logic level to "H." FIG. 2(f) shows a change of an operational mode of the discharge switch 112 in response to the discharge period signal. FIG. 2(g) shows a change of a current (actuator current) flowing through the piezoelectric actuator PA. FIG. 2(h) shows a change of the potential (actuator voltage) of the high-potential terminal of the piezoelectric actuator PA.

At time t1, when the injection signal IJTa is inputted into the controller 150 from the electronic control unit 10, the controller 150 generates the charge period signal in a mode where it takes a logic level "H" from time t1 to time t2 based on this injection signal IJTa and outputs a selection control signal in order to selectively set the selection switch 109a to ON. Then, based on the generated charge period signal, the controller 150 performs ON/OFF-operations on the charge switch 105. The electronic control unit 10 may be configured to generate the charge period signal and set variably a period of this signal in which a logic level "H" is taken according to predetermined conditions, such as common-rail pressure.

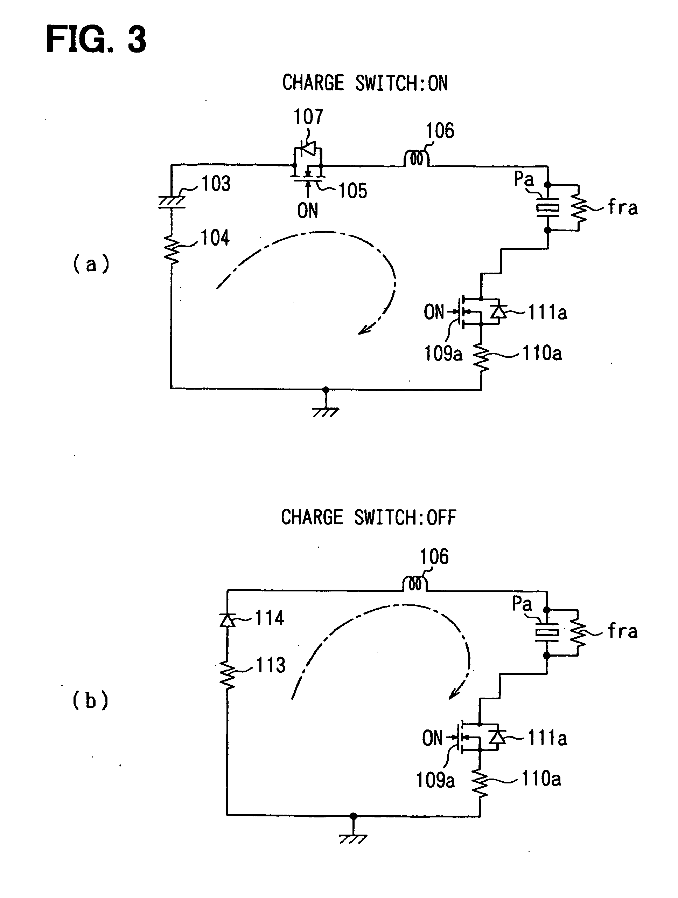

Here, by the charge switch 105 being turned on, a closed-loop circuit composed of the capacitor 103, the charge switch 105, the charging/discharging coil 106, the piezoelectric actuator PA, the selection switch 109a, the resistor 110a and the resistor 104 is formed, as shown in FIG. 3(a). With this closed-loop circuit, the electric charge of the capacitor 103 is charged in the piezoelectric actuator PA. On the other hand, after the ON-operation of the charge switch 105 for a predetermined period, this charge switch 105 is turned off, which forms a closed-loop circuit composed of the diode 114, the charging/discharging coil 106, the piezoelectric actuator PA, the selection switch 109a, the resistor 110a and the resistor 113, as shown in FIG. 3(b). With this closed-loop circuit, flywheel energy of the charging/discharging coil 106 is charged in the piezoelectric actuator PA.

With the charge switch 105 being operated in the above mode, the piezoelectric actuator PA is charged and the potential of the high-potential terminal of the piezoelectric actuator PA rises as shown in FIG. 2(h).

On the other hand, when the injection signal IJTa becomes a logic "L" at time t3 as shown in FIG. 2(a), the controller 150 generates the discharge period signal in a mode where it takes a logic level "H" from time t3 to time t4, and performs ON/OFF-operations on the discharge switch 112.

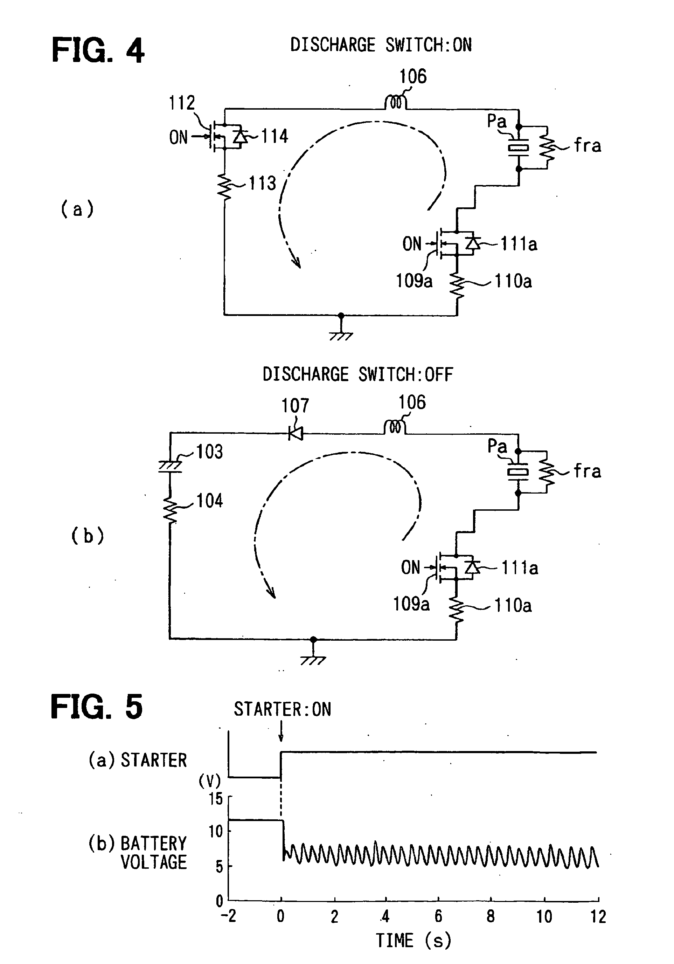

That is, with the discharge switch 112 being turned on, a closed-loop circuit is formed with the discharge switch 112, the charging/discharging coil 106, the piezoelectric actuator PA, the selection switch 109a, the resistor 110a and the resistor 113 as shown in FIG. 4(a). With this closed-loop circuit, the piezoelectric actuator PA is discharged. Furthermore, by this discharge switch 112 being turned off after the ON-operation on the discharge switch 112 for a predetermined time, a closed-loop circuit is formed with the capacitor 103, the diode 107, the charging/discharging coil 106, the piezoelectric actuator PA, the selection switch 109a, the resistor 110a and the resistor 104, as shown in FIG. 4(b). With this closed-loop circuit, the flywheel energy of the charging/discharging coil 106 is collected to the capacitor 103 through the diode 107.

With the discharge switch 112 being operated in the above mode, the piezoelectric actuator PA is discharged and the potential of the high-potential terminal of the piezoelectric actuator PA falls as shown in FIG. 2(h).

Then, at time t5 after the end of the control period to perform discharging, the selection switch 109a is turned off. Considering a function of the diode 111 a that is a parasitic diode of the selection switch 109a, it is possible to turn off this selection switch 109a at the time of the end of the charge control. However, in order to secure more excellent continuity, the ON-operation on the selection switch 109a is performed in the above mode.

By performing ON/OFF-operations on the charge switch 105 and ON/OFF-operations on the discharge switch 112 in the above, charge and discharge controls of the piezoelectric actuator PA can be performed.

However, when the voltage of the battery B drops substantially, such as when the starter motor ST is energized to start the engine, the supply voltage to the controller 150 and the electronic control unit 10 may drop below the minimum values of the voltages (minimum operating voltages) that guarantee these operations. In this instance, operations of the drive state of the charging/discharging circuit CD by the controller 150 and the electronic control unit 10 become impossible. Even under these circumstances, in order to discharge the electric charge stored in the piezoelectric actuator PA, the embodiment is provided with a discharging path used for discharging the piezoelectric actuator PA. This path is established, when the above operation becomes impossible, setting up this discharging path to the charging/discharging circuit CD.

That is, as shown in FIG. 1, a series connection circuit of an automatic discharge switch 130 from its source to its drain. This switch 130 is made up of a P-channel MOS transistor and a resistor 131 and is provided between a node of the charge switch 105 and the charging/discharging coil 106 and the ground. On the other hand, on the gate of the automatic discharge switch 130, the boosted voltage of the DC/DC converter 101 is applied through a diode 133 and a resistor 134. Further, a circuit made up of a parallel connection circuit of a capacitor 135 and a resistor 136 that is a circuit for discharging the supplied electric charge in a predetermined discharge speed is connected between the output side of this diode 133 and the ground.

With this circuit, when the DC/DC converter 101 is suspended because of impossibility in operations of the electronic control unit 10 and the controller 150 or the like, the electric charge stored in the capacitor 135 is discharged and consequently the output-side potential of the diode 133 (the potential of node k) also drops. Then, when the potential of node k drops below the potential of the high-potential terminal (node m) of the piezoelectric actuator PA by a predetermined threshold, the automatic discharge switch 130 will function as a path establishing circuit that sets up a discharging path (the resistor 131 and the ground) to node m. By this path establishing circuit, even when the discharge of the electric charge to the ground through the discharge switch 112 becomes impossible, it becomes possible to discharge the electric charge stored in the piezoelectric actuator PA.

Moreover, when the operation becomes impossible, the automatic discharge switch 130 is connected to node m between the charging/discharging coil 106 and the charge switch 105, whereby the electric charge of the piezoelectric actuator PA will be discharged through the charging/discharging coil 106. This also makes it possible to prevent the electric charge of the piezoelectric actuator PA from flowing through the automatic discharge switch 130 in a very short time.

As shown in FIG. 1, the controller 150 is connected to the resistor 131 for detecting the amount of current flowing in the resistor 131 by taking out the potential of node n. Then, based on this, when the operation of the drive state of the charging/discharging circuit CD is being performed normally, the controller 150 monitors whether an erroneous operation that turns on the automatic discharge switch 130 is present.

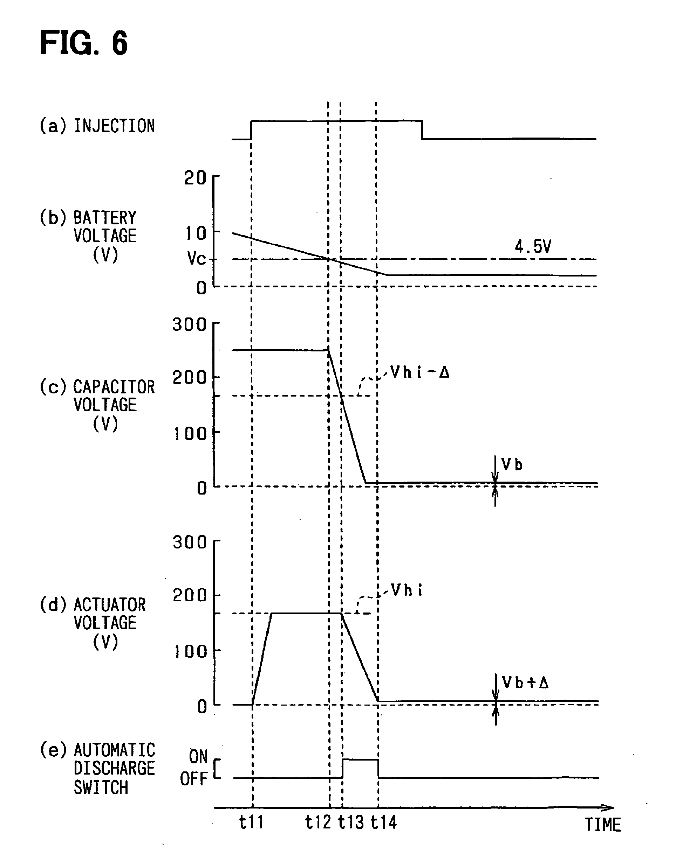

Here, the voltage drop of the battery B in starting the engine by starting the starter motor ST and an operation of the path establishing circuit accompanying it will be explained using FIGs. 5 and 6.

FIG. 5 is a time chart showing one example of changes of the voltage of the battery B at the time of starting of the starter motor ST. As the starter motor ST starts as shown in FIG. 5(a), the voltage of the battery B drops and continues to fluctuate in a low voltage area as shown in FIG. 5(b). Here, this variation synchronizes with a cycle having peaks each corresponding to a time at which an arbitrary piston among pistons provided in an engine comes to a top dead point. That is, in the embodiment illustrating four cylinders, this cycle is "180° CA."

FIG. 6 is a time chart of several points of the charging/discharging circuit CD at the time of such voltage drop of the battery B. FIG. 6 is for a time of general voltage drop, not in correspondence to the time chart of FIG. 5. FIG. 6(a) shows a change of the injection signal; FIG. 6(b) shows a change of the voltage of the battery B; FIG. 6(c) shows a change of the potential of the high-potential terminal of the capacitor 135 (the potential of node k); FIG. 6(d) shows a change of the potential of the high-potential terminal of the piezoelectric actuator PA; and FIG. 6(e) shows a change of ON/OFF operations of the automatic electric discharge switch, respectively.

Here, when the injection signal is inputted into the controller 150 from the electronic control unit 10 at time t11, the potential of the piezoelectric actuator PA rises as the piezoelectric actuator PA is being charged. However, when the voltage of the battery B drops below the minimum operating voltage Vc (for example, "4.5 volts") of the controller 150, the operation of the transistor 101 t is halted by the controller 150 at time t12, and consequently the operation of the DC/DC converter 101 will also be halted. For this reason, the potential of the high-potential terminal of the capacitor 135 will also drop at time t12 and later. Then, at time t13 when the potential of the high-potential terminal of the capacitor 135 becomes almost equal to the potential Vhi of the high-potential terminal of the piezoelectric actuator PA (more specifically, at a time when the potential of the capacitor 135 becomes a potential that is lower than the potential of node m by a threshold Δ for turning on the automatic discharge switch 130), the automatic discharge switch 130 is turned on, whereby the piezoelectric actuator PA is discharged.

By this operation, the potential of the high-potential terminal of the piezoelectric actuator PA drops. That is, as shown in FIG. 6, even when it is after the charging of the piezoelectric actuator PA and the operation of the discharge switch 112 becomes impossible before the discharge control, the electric charge stored in the piezoelectric actuator PA will be discharged through the automatic discharge switch 130. Here, the potential of the capacitor 135 finally drops to the voltage Vb of the battery B. On the other hand, the potential of the piezoelectric actuator PA drops until the automatic discharge switch 130 turns off at time t14. That is, the potential of the node m drops until it reaches a potential "Vb + Δ" that is higher than the potential of the capacitor 135 by the threshold Δ.

Thus, according to the embodiment, even when the voltage of the battery B drops below the minimum operating voltages of the controller 150 and the electronic control unit 10 and the discharge switch 112 becomes inoperable, such as at the time of engine starting etc., the electric charge stored in the piezoelectric actuator PA can be discharged. Then, with this fail-safe function, it becomes possible to shut the fuel injection valves Fla to Fld.

Here, even without the automatic discharge switch 130 or the like, the electric charge stored in the piezoelectric actuator PA will be gradually or slowly discharged through a series connection circuit of the resistor 121 and the resistor 122 and the resistors fra to frd. However, these resistors 121, 122 and the resistors fra to frd are given such setting so as not to hamper normal charge and discharge controls. Therefore, even when the circumstances are such that the piezoelectric actuator PA is required to be discharged quickly because of malfunction of the controller 150 etc., the piezoelectric actuator PA cannot be made to discharge quickly through these resistors 121, 122 and the resistors fra to frd. In this respect, in the embodiment, even under circumstances where the piezoelectric actuator PA is required to be discharged quickly, it becomes possible to exactly fulfill this requirement by providing the automatic discharge switch 130 etc.

A discharge starting time of the automatic discharge switch 130 can be adjusted by setting of the capacitance of the capacitor 135 and the resistance of the resistor 136. Further, the setting of the capacitance of the capacitor 135 and the resistance of the resistor 136 will determine the degree of potential drop in node m caused by the discharging of the piezoelectric actuator PA. That is, when the degree of potential drop of node m by discharging of the piezoelectric actuator PA through the automatic discharge switch 130 is larger than the degree of potential drop of the high-potential terminal (node k) of the capacitor 135, the automatic discharge switch 130 will be turned off again. In this case, when the potential of node k drops below the potential of node m by a predetermined value, the automatic discharge switch 130 is turned on. This operation and others will repeat the ON/OFF-operations of the automatic discharge switch 130. As a result, the potential drop of node m by the discharging of the piezoelectric actuator PA is delayed. Because of this, in order to discharge the electric charge of the piezoelectric actuator PA quickly, a larger discharge speed through the parallel connection circuit of the capacitor 135 and the resistor 136 is preferable.

In this occasion, however, when the operation of the drive state of the charging/discharging circuit CD is performed normally, the capacitor 135 and the resistor 136 are so set that the normal operation is not hampered by erroneous operations of the automatic discharge switch 130. That is, the capacitance of the capacitor 135 and the resistance of the resistor 136 are set to such values that, when the normal operation is being performed, this avoids erroneous operations of the automatic discharge switch 130 and that, when the operation becomes impossible, it enables the piezoelectric actuator PA to be discharged quickly through the automatic discharge switch 130. Thus, the values are set to such values that, when the boosted voltage by the above DC/DC converter 101 is being applied, it hardly reduces the potential of node k and that, when the boosted voltage by the DC/DC converter 101 is not being applied, it reduces the potential of node k quickly.

### (First further example which is no embodiment of the invention)

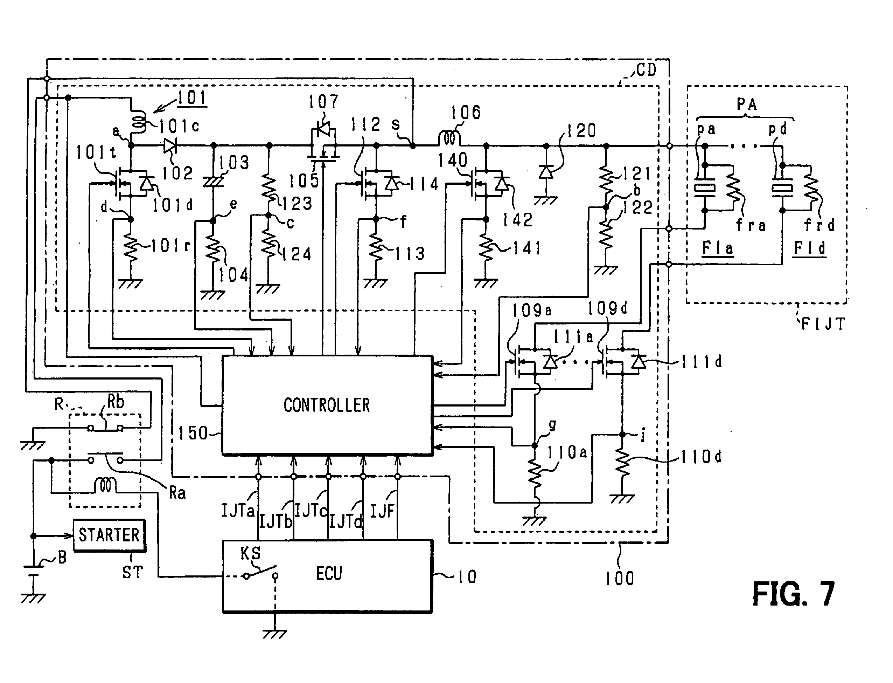

In the first further example shown in FIG. 7, similar circuits as those of the embodiment (FIG. 1) are designated with the same reference symbols for brevity. Further, the charging/discharging circuit CD, the driver unit 100, the controller 150 and the electronic control unit 10 in FIG. 7 are different from those shown in FIG. 1 in some functions, but are designated with the same reference symbols as performing the similar roles.

As shown in FIG. 7, a series connection circuit of a full discharge switch 140 and a resistor 141 is provided between a node of the piezoelectric actuator PA and the charging/discharging coil 106 and the ground. Here, the full discharge switch 140 is made up of a N-channel MOS transistor. Moreover, a diode 142 is a parasitic diode formed by the formation of this transistor, and its cathode is connected to the charging/discharging coil 106 and its anode is connected to the ground, respectively.

This full discharge switch 140 is for discharging the electric charge that cannot be discharged completely by the above discharge control of the piezoelectric actuator PA through the charging/discharging circuit CD. That is, even when the piezoelectric actuator PA is made to discharge the electric charge through the discharge switch 112, the electric charge may remain in the piezoelectric actuator PA after this discharge control, because the discharging by this discharge switch 112 is done through the charging/discharging coil 106 and the like. For this reason, after the discharge control by an operation of the discharge switch 112, while monitoring a current flowing in the resistor 141, the controller 150 turns on the full discharge switch 140. Then, the full discharge switch 140 is turned off when the current flowing in the resistor 141 became 0.

Furthermore, a discharging path that, when operations of the electronic control unit 10 and the controller 150 become impossible, allows the piezoelectric actuator PA to be discharged and a path establishing circuit for setting up this discharging path to the high-potential terminal of the piezoelectric actuator PA are constructed in the following way.

That is, the path establishing circuit is constructed by connecting the battery B and the driver unit 100 through the contact Ra of the relay R and by connecting the high-potential terminal of the piezoelectric actuator PA and the ground through the contact Rb of the relay R. With this configuration, when the supply voltage to the controller 150 drops below its operating voltage due to a voltage drop of the battery B etc., the high-potential terminal of the piezoelectric actuator PA will be connected to the ground through the contact Rb.

That is, since the contact Ra of the relay R is normally open and the contact Rb is normally closed, when the supply voltage to the contact Ra of the relay R drops below its minimum operating voltage (a voltage at which the operation of the relay is guaranteed), the contact Ra of the relay R is set to OFF and the contact Rb thereof is set to ON. The use of this characteristic of the relay R enables the construction of the path establishing circuit using the relay R as the automatic discharging switch. In this case, the minimum operating voltage (for example, 5.5 volts) of the relay R is set to any value equal to or more than the minimum operating voltage (for example, 3.5-4.0 volts) of the electronic control unit 10 and the minimum operating voltage Vc (for example, 4.5 volts) of the controller 150.

Here, the high-potential terminal of the piezoelectric actuator PA connected to the contact Rb of the relay R is placed between the charging/discharging coil 106 and the charge switch 105 (node s). This connection makes it possible to prevent the electric charge of the piezoelectric actuator PA from flowing through the contact Rb of the relay R in a very short time with the help of the charging/discharging coil 106 when the voltage of the battery B drops below the minimum operating voltage of the relay R.

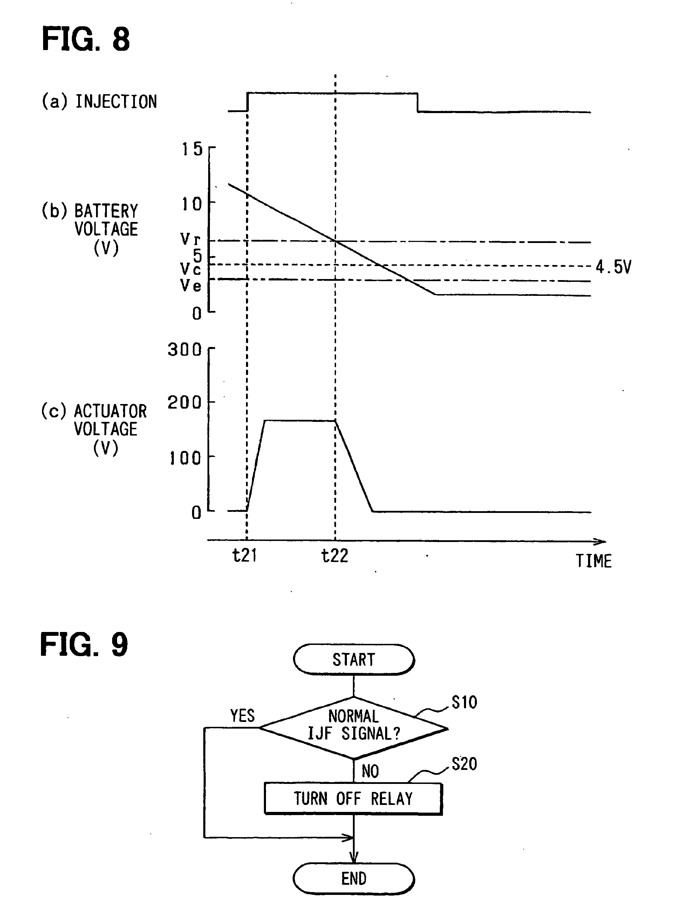

Here, operations of the path establishing circuit according to this further example will be described using FIG. 8.

FIG. 8 is a time chart when the voltage of the battery B drops. FIG. 8(a) shows a change of an injection signal, FIG. 8(b) shows a change of the voltage of the battery B, and FIG. 8(c) shows a change of the potential of the high-potential terminal of the piezoelectric actuator PA, respectively.

Here, when the injection signal is inputted into the controller 150 from the electronic control unit 10 at time t21, the potential of the piezoelectric actuator PA rises as shown in FIG. 8 (c) as the piezoelectric actuator PA is being charged. Then at time t22, when the voltage of the battery B drops below the minimum operating voltage Vr of the relay R, although the switch KS has been turned on, the contact Ra of the relay R is turned off and the contact Rb thereof is turned on. Therefore, discharging of the piezoelectric actuator PA through the relay R is started, and the potential of the high-potential terminal drops. In FIG. 8(b), Vc denotes the minimum operating voltage of the controller 150 and Ve denotes the minimum operating voltage of the electronic control unit 10, respectively. As in the figure, since the minimum operating voltage Vr of the relay R is higher than the minimum operating voltage Vc of the controller 150 and the minimum operating voltage Ve of the electronic control unit 10, it becomes possible to discharge the electric charge stored in the piezoelectric actuator PA before operations of the controller 150 or the electronic control unit 10 halt.

When the minimum operating voltage of the charging/discharging circuit CD is higher than the minimum operating voltages Vc and Ve of the controller 150 and the electronic control unit 10, it is preferable to set the minimum operating voltage of the relay R to be higher than the minimum operating voltage of the charging/discharging circuit CD.

### (Second further example which is no embodiment of the invention)

In the second further example shown in FIG. 9, when operations of the charging/discharging circuit CD by the controller 150 and the electronic control unit 10 become impossible, the piezoelectric actuator PA is discharged using the same configuration as in the embodiment (FIG. 2). It is to be noted that when the controller 150 generates the IJF signal for notifying an abnormality of the charging/discharging circuit, the electronic control unit 10 performs a control of turning off the relay R.

This control will be explained using FIG. 9, which shows a procedure of fail-safe processing at the time of abnormality of the charging/discharging circuit CD according. This processing is repeatedly performed by the electronic control unit 10, for example, at predetermined intervals.

In this series of processing steps, first in step S10, it is determined whether the IJF signal is normal from the controller 150, that is, whether presence of an abnormality is detected in the charging/discharging circuit CD. When it is determined that the IJF signal is not normal (being abnormal) in step S10, a control of turning on the relay R through an operation of the switch KS is performed in step S20. By this control, the contact Ra becomes open and the contact Rb becomes closed. On the other hand, when it is determined that the IJF signal is normal in step S10, or when processing in step S20 is ended, this series of processing steps is temporarily ended.

As described above, according to this example, when presence of an abnormality is detected in the charging/discharging circuit CD, the piezoelectric actuator PA can be quickly discharged through the contact Rb of the relay R. Conventionally, when presence of an abnormality is detected in the electrical charging/discharging circuit, a control of turning off a relay for supplying electric power thereto is performed. However, in this case, for example, when the discharge switch 112 and the full discharge switch 140 are failure by open defect, even when the relay is turned off, the electric charge stored in the piezoelectric actuator PA will not be discharged quickly. Unlike this, in this example, the electric charge stored in the piezoelectric actuator PA can be discharged quickly by a control of turning off the relay R, by connecting the high-potential terminal of the piezoelectric actuator PA and the ground through the contact Rb of the relay R.

### (Other Examples)

The above embodiment and further examples may be modified as described below.

When a drive state of the charging/discharging circuit CD is operated normally, the automatic discharge switch 130 may also be used to discharge such charge as cannot be discharged only by the operation of the discharge switch 112 at the time of discharging.

The booster circuit to boost the supply voltage is not limited to the DC/DC converter 101; for example, a transformer etc. may be used.

The discharging circuit for discharging the supplied electric charge is not limited to the parallel connection circuit of the capacitor 135 and the resistor 136. Moreover, the following configuration may be adopted: when the controller 150 operates normally, the source and the drain of the P-channel transistor are connected to the parallel connection circuit and the ground, respectively, so that no output from the diode 133 may be discharged at all, and a voltage applied to the gate is controlled by the controller 150.

A first rectifier for rectifying the boosted voltage before the boosted voltage of the booster circuit is applied to the piezoelectric actuator PA is not limited to the diode 102. Any circuit element can be used as long as it can block a current flow from the piezoelectric actuator PA to the booster circuit. Furthermore, a second rectifier for rectifying the boosted voltage before the boosted voltage of the booster circuit is applied to the discharging circuit is not limited to the diode 133. Any circuit element can be used as long as it can block a current flow from the discharging circuit to the booster circuit.

As a potential drop point that is assumed to become lower in potential than the high-potential terminal of the piezoelectric actuator PA when an operation of the charging/discharging circuit CD by the charging/discharging circuit CD is impossible is not limited to the high potential side of the discharging means. For example, instead of this discharging circuit, the output side of the second rectifier and the ground may be connected to the source and the drain of the P-channel MOS transistor and a voltage applied to the gate may be controlled by the controller 150. In this case, at the time of the operational impossibility, since it becomes impossible for the controller 150 to apply a voltage to the gate, continuity will be attained between the source and drain of the P-channel transistor. For this reason, it is assumed that the potential of the output side of the second rectifier drops below the potential of the high-potential terminal of the piezoelectric actuator PA. Moreover, for example, a voltage applied to the gate of the automatic discharge switch 130 may be controlled by the controller 150. In this case, at the time of the operational impossibility, since the controller 150 can no longer apply electric charge to the gate, it is assumed that the voltage applied to the gate of the automatic discharge switch 130 drops below the voltage of the high-potential terminal of the piezoelectric actuator PA.

Although, in the embodiment above, the automatic discharge switch 130 is so provided that its one end is connected between the charge switch 105 and the charging/discharging coil 106, the configuration is not limited to this and may be arbitrary as long as its end is connected to a node between the high-potential terminal of the piezoelectric stack (piezoelectric actuator PA) and the cathode of the diode 102. However, it is preferable that the one end is connected between the charging/discharging coil 106 and the cathode of the diode 102, that is, the charge of the piezoelectric actuator PA is discharged through the charging/discharging coil 106 by means of the automatic discharge switch 130. This preferred configuration makes it possible to avoid the current from flowing through the automatic discharge switch 130 in a very short time when the piezoelectric actuator PA is discharged by means of the automatic discharge switch 130.

In some cases, for example, where operations of the automatic discharge switch 130 are not monitored, it is not necessary to use the resistor 131. That is, the discharging path for allowing the charge stored in the piezoelectric actuator PA to be discharged is not limited to the path that has continuity with the ground through a resistor.

Although in the embodiment above, the path establishing circuit is constructed to comprise the P-channel transistor, the path establishing circuit is not limited to this. It is essential only that the path establishing circuit connects the output side of the first rectifier and the discharging path when the output-side potential of the second rectifier drops below the output-side potential of the first rectifier by a predetermined value or more.

Although in the first further example above, the node between the charge switch 105 and the charging/discharging coil 106 is connected to the ground through the contact Rb of the relay R, the connection point between the charging/discharging circuit CD and the contact Rb of the relay R is not limited to this. What is necessary for the connection point is just to be between the cathode of the diode 102 and the high-potential terminal of the piezoelectric actuator PA. However, it is preferable for the connection point to be between the charging/discharging coil 106 and the cathode of the diode 102. This configuration makes it possible to avoid the current from flowing through the contact Rb of the relay R in a very short time. Moreover, when it is connected to another part, a means for controlling a current flow may be provided between the contact Rb of the relay R and the charging/discharging circuit CD.

The path establishing circuit that monitors the supply voltage to both the electronic control unit 10 and the driver unit 100 and, when the supply voltage becomes less than a predetermined value, sets up a discharging path to the high-potential terminal of the piezoelectric actuator PA is not limited to the means constructed to comprise the relay. Moreover, the path establishing circuit is not limited to one that monitors the supply voltage of the power supply circuit for supplying electric power to both the electronic control unit 10 and the driver unit 100. It is essential only that the path establishing circuit monitors the supply voltage of the power supply circuit for supplying electric power to at least one of the electronic control unit 10, the controller 150, and the charging/discharging circuit CD.

Although in the first further example above, when presence of an abnormality is detected in the charging/discharging circuit CD, the electronic control unit 10 performs a control of turning off the relay R, the control is not limited to this. For example, when presence of an abnormality is detected in the charging/discharging circuit CD, the controller 150 may perform a control of turning off the relay R.

Processing that the electronic control unit 10 turns off the relay R, which is processing of the second further example above, can be performed even in the case where minimum operating voltages of the relay R, the charging/discharging circuit CD, the electronic control unit 10, and the controller 150 are set arbitrarily.

The path establishing circuit that, when the operation of the drive state of the charging/discharging circuit CD by the controller 150 or the electronic control unit 10 becomes impossible, sets up the discharging path that allows the piezoelectric actuator to be discharged to the high-potential terminal of the actuator is not limited to ones that were illustrated in the above embodiment, further examples, and their modifications. Moreover, for another aspects, for example, a configuration comprising both configurations in FIG. 1 and 2 may be adopted.

The charging/discharging circuit used for charging and discharging of the piezoelectric actuator is not limited to ones that are shown in FIGs. 1 and 7. For example, the driving system in FIG. 1 may be equipped with the full discharge switch 140 shown in FIG. 7. Moreover, in FIG. 7, since it is expected that a parasitic diode (the diode 142) of the full discharge switch 140 plays the same role as the diode 120, this diode 120 may be omitted. Furthermore, the configuration equipped with a function of collecting the electric charge of the piezoelectric actuator at the time of discharging using the capacitor 103 is not necessarily adopted. Furthermore, when a high voltage required for charging the piezoelectric actuator can be secured by the power supply means, it is not necessary for the configuration to be equipped with a booster circuit.

Furthermore, when the piezoelectric actuator PA can be charged excellently by applying the voltage of the power supply means or the booster circuit, it is not necessary for the configuration to be equipped with the charging/discharging coil 106. It is essential only that a charging/discharging circuit allows controls pertaining to charging and discharging of the piezoelectric actuator to be performed by the drive state being operated, such as one that is equipped with a loop circuit for charging between a piezoelectric actuator and a power supply circuit, a charge switch for controlling its open/close state, a loop circuit for discharging including the piezoelectric actuator, and a discharge switch for controlling its open/close state.

The control circuit for performing controls pertaining to charging and discharging by operating the drive state of the charging/discharging circuit is not limited to one that is constructed with the controller 150 and the electronic control unit 10. Moreover, for example, the electronic control unit 10 may be constructed to comprise the driver unit 100 in it.

The piezoelectric actuator is not limited to an actuator used for a fuel injection valve of a diesel engine, and may be, for example, an actuator used for a fuel injection valve of an in-cylinder injection type gasoline engine.

## Claims

1. A driving system for a piezoelectric actuator comprising:
a booster circuit (101) for boosting a supply voltage;
a control means (150) for performing a control of charging a piezoelectric actuator (PA) by applying a boosted voltage of the booster circuit and a control of discharging the piezoelectric actuator, the boosted voltage of the booster circuit being applied to one terminal of the piezoelectric actuator through a first rectifier means (102),
a discharging means (135, 136) for discharging electric charge;
a second rectifier means (133) for supplying the boosted voltage to the discharging means, and
an automatic discharging switch (130) connected to an output side of the second rectifier means (133) to discharge the piezoelectric actuator to a discharging path when a potential of the output side (node k) of the second rectifier means (133) becomes lower than the high potential of the piezoelectric actuator (node m) by a predetermined value.

2. The driving system for a piezoelectric actuator according to claim 1, wherein:
the automatic discharging switch (130) includes a P-channel transistor (130) having a source, a drain and a gate that are connected to the output side of the first rectifier means, the discharging path and the output side of the second rectifier means, respectively.

3. The driving system for a piezoelectric actuator according to claim 1 or 2, wherein the booster circuit (101) includes
a charging/discharging circuit (CD) for charging and discharging the piezoelectric actuator through a charging switch (105) and a discharging switch (112), respectively.

4. The driving system for a piezoelectric actuator according to claim 1, wherein:
the automatic discharging switch (130) includes a P-channel transistor (130);
a high potential terminal (m) of the piezoelectric actuator and the discharging path are connected to a source and a drain of the P-channel transistor, respectively; and
a potential drop point (k) at which a potential becomes lower than that of the high potential terminal when it becomes impossible to control the piezoelectric actuator by the control means is connected to a gate of the P-channel transistor.

5. The driving system for a piezoelectric actuator according to any of claims 1 to 4, wherein
the piezoelectric actuator (PA) is an actuator used for opening and closing a fuel injection valve provided in an internal combustion engine of a vehicle.

## Patentansprüche

1. Ansteuersystem für einen piezoelektrischen Aktor, mit:
einer Verstärkerschaltung (101) zum Verstärken einer Versorgungsspannung;
einer Steuereinrichtung (150) zum Durchführen einer Steuerung eines Ladens eines piezoelektrischen Aktors (PA) durch Anlegen einer verstärkten Spannung der Verstärkerschaltung und einer Steuerung eines Entladens des piezoelektrischen Aktors, wobei die verstärkte Spannung der Verstärkerschaltung über eine erste Gleichrichtereinrichtung (102) an einen Anschluss des piezoelektrischen Aktors angelegt wird,
einer Entladungseinrichtung (135, 136) zum Entladen einer elektrischen Ladung;
einer zweiten Gleichrichtereinrichtung (133) zum Zuführen der verstärkten Spannung zu der Entladungseinrichtung, und
einem automatischen Entladungsschalter (130), der an eine Ausgangsseite der zweiten Gleichrichtereinrichtung (133) angeschlossen ist, um den piezoelektrischen Aktor zu einem Entladungspfad zu entladen, wenn ein Potential auf der Ausgangsseite (Knoten k) der zweiten Gleichrichtereinrichtung (133) um einen vorbestimmten Wert niedriger als das hohe Potential des piezoelektrischen Aktors (Knoten m) wird.

2. Ansteuersystem für einen piezoelektrischen Aktor gemäß Anspruch 1, wobei:
der automatische Entladungsschalter (130) einen P-Kanal-Transistor (130) mit einer Source, einem Drain und einem Gate umfasst, die an die Ausgangsseite der ersten Gleichrichtereinrichtung, den Entladungspfad bzw. die Ausgangsseite der zweiten Gleichrichtereinrichtung angeschlossen sind.

3. Ansteuersystem für einen piezoelektrischen Aktor gemäß Anspruch 1 oder 2, wobei die Verstärkerschaltung (101) umfasst
eine Ladungs-/Entladungsschaltung (CD) zum Laden und Entladen des piezoelektrischen Aktors über einen Ladungsschalter (105) bzw. einen Entladungsschalter (112).

4. Ansteuersystem für einen piezoelektrischen Aktor gemäß Anspruch 1, wobei:
der automatische Entladungsschalter (130) einen P-Kanal-Transistor (130) umfasst;
ein Hoch-Potential-Anschluss (m) des piezoelektrischen Aktors und der Entladungspfad an eine Source bzw. einen Drain des P-Kanal-Transistors angeschlossen sind; und
ein Potentialabfallpunkt (k), an dem ein Potential niedriger wird als das des Hoch-Potential-Anschlusses, wenn es unmöglich wird, den piezoelektrischen Aktor durch die Steuereinrichtung zu steuern, an ein Gate des P-Kanal-Transistors angeschlossen ist.

5. Ansteuersystem für einen piezoelektrischen Aktor gemäß einem der Ansprüche 1 bis 4, wobei
der piezoelektrische Aktor (PA) ein Aktor ist, der zum Öffnen und Schließen eines Kraftstoffeinspritzventils verwendet wird, das in einer Brennkraftmaschine eines Fahrzeugs vorgesehen ist.

## Revendications

1. Système d'entraînement pour un actionneur piézo-électrique comprenant :
un circuit de survoltage (101) pour augmenter une tension d'alimentation ;
des moyens de commande (150) pour effectuer une commande de charge d'un actionneur piézo-électrique (PA) en appliquant une tension augmentée du circuit de survoltage et une commande de décharge de l'actionneur piézo-électrique, la tension augmentée du circuit de survoltage étant appliquée à une borne de l'actionneur piézo-électrique par l'intermédiaire de premiers moyens formant redresseur (102) ;
des moyens de décharge (135, 136) pour décharger une charge électrique ;
des deuxièmes moyens formant redresseur (133) pour appliquer la tension augmentée aux moyens de décharge ; et
un commutateur de décharge automatique (130) connecté à un côté de sortie des deuxièmes moyens formant redresseur (133) pour décharger l'actionneur piézo-électrique vers un trajet de décharge lorsqu'un potentiel du côté de sortie (noeud k) des deuxièmes moyens formant redresseur (133) devient inférieur au potentiel élevé de l'actionneur piézo-électrique (noeud m) d'une valeur prédéterminée.

2. Système d'entraînement pour un actionneur piézo-électrique selon la revendication 1, dans lequel :
le commutateur de décharge automatique (130) comprend un transistor à canal P (130) ayant une source, un drain et une grille qui sont connectés au côté de sortie des premiers moyens formant redresseur, au trajet de décharge et au côté de sortie des deuxièmes moyens formant redresseur, respectivement.

3. Système d'entraînement pour un actionneur piézo-électrique selon la revendication 1 ou 2, dans lequel le circuit de survoltage (101) comprend :
un circuit de charge/décharge (CD) pour charger et décharger l'actionneur piézoélectrique par l'intermédiaire d'un commutateur de charge (105) et d'un commutateur de décharge (112), respectivement.

4. Système d'entraînement pour un actionneur piézo-électrique selon la revendication 1, dans lequel :
le commutateur de décharge automatique (130) comprend un transistor à canal P (130) ;
une borne de potentiel élevé (m) de l' actionneur piézo-électrique et le trajet de décharge sont connectés à une source et un drain du transistor à canal P, respectivement ; et
un point de chute de potentiel (k), au niveau duquel un potentiel devient inférieur à celui de la borne de potentiel élevé lorsqu'il devient impossible de commander l'actionneur piézo-électrique par les moyens de commande, est connecté à une grille du transistor à canal P.

5. Système d'entraînement pour un actionneur piézo-électrique selon l'une quelconque des revendications 1 à 4, dans lequel :
l'actionneur piézo-électrique (PA) est un actionneur utilisé pour ouvrir et fermer une soupape d'injection de carburant prévue dans un moteur à combustion interne d'un véhicule.
